(19) Europäisches Patentamt
European Patent Office
Office européen des brevets

(11) **EP 1 913 600 B1**

(12) **FASCICULE DE BREVET EUROPEEN**

(45) Date de publication et mention
de la délivrance du brevet:
**02.03.2011 Bulletin 2011/09**

(51) Int Cl.:
*G21C 3/36* *(2006.01)*  *G21C 3/04* *(2006.01)*
*G21C 3/06* *(2006.01)*  *G21C 3/18* *(2006.01)*

(21) Numéro de dépôt: 06792729.3

(22) Date de dépôt: **08.08.2006**

(86) Numéro de dépôt international:
**PCT/EP2006/065142**

(87) Numéro de publication internationale:
**WO 2007/017503 (15.02.2007 Gazette 2007/07)**

(54) **ELEMENT COMBUSTIBLE DE TYPE PLAQUE MACROSTRUCTUREE**

BRENNELEMENT MIT MAKROSTRUKTURIERTER PLATTE

MACROSTRUCTURED PLATE FUEL ELEMENT

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **10.08.2005 FR 0552488**

(43) Date de publication de la demande:
**23.04.2008 Bulletin 2008/17**

(73) Titulaire: **Commissariat à l'Énergie Atomique
et aux Énergies Alternatives
75015 Paris (FR)**

(72) Inventeur: **RAVENET, Alain
F-83560 Vinon-sur-Verdon (FR)**

(74) Mandataire: **Poulin, Gérard et al
BREVALEX
95 rue d'Amsterdam
75378 Paris Cedex 8 (FR)**

(56) Documents cités:
FR-A- 2 398 367     US-A- 3 071 526
US-A- 3 311 541     US-A- 3 855 061
US-A- 4 038 135     US-A- 4 963 317

## Description

## DOMAINE TECHNIQUE

La présente invention se rapporte au domaine des éléments combustibles utilisés dans les réacteurs nucléaires et notamment à des plaques combustibles développées dans le cadre des nouvelles conceptions de réacteurs dites de quatrième génération.

Plus particulièrement, le dispositif selon l'invention est conçu pour les installations fonctionnant dans le domaine des hautes températures, c'est-à-dire pour les réacteurs HTR (« *High Temperature Reactors* ») dans lesquels la température du fluide de refroidissement en sortie de réacteur est supérieure à 800˚C ; de préférence, il s'agit de réacteurs à caloporteur gazeux fonctionnant avec un flux neutronique rapide refroidi par un gaz, ou GFR (pour « *Gas Fast Reactor* ») .

L'invention propose ainsi une conception d'élément adaptée aux conditions de fonctionnement imposées et offrant des performances accrues ; elle propose plus particulièrement un nouveau design « d'élément plaque » combustible composite macro structurée qui répond au cahier des charges des GFR.

## ÉTAT DE LA TECHNIQUE ANTÉRIEURE

Les centrales de production d'énergie à partir des réactions de fission nucléaire utilisent des éléments combustibles dans lesquels se produisent les fissions libérant une puissance calorifique, qui en est extraite par échange thermique avec un fluide caloporteur assurant leur refroidissement.

A cette fin, tout en supportant les contraintes qu'imposent le comportement du combustible et ses conditions de fonctionnement, les principes généraux de conception des éléments combustibles de base visent à satisfaire les fonctionnalités suivantes :

- avoir une teneur volumique en atomes fissiles compatible avec les conditions de fonctionnement neutronique et la densité de puissance volumique du volume réactif,
- assurer le transfert thermique entre le matériau combustible et le fluide caloporteur,
- confiner les produits de fission solides et gazeux relâchés par le combustible.

En effet, les réactions de fission au sein du combustible génèrent des produits de fission solides et gazeux qui provoquent un gonflement de la structure du matériau, phénomène activé par la thermique qui induit également des mécanismes de relâchement des gaz de fission en dehors du matériau combustible. Un gainage du matériau combustible permet d'accommoder ces déformations sans perdre l'intégrité de l'élément.

La densité des fissions au sein du combustible est directement corrélée à la puissance volumique à évacuer vers le caloporteur au travers de la gaine. La résistance thermique entre la source de chaleur et le caloporteur doit donc être minimale pour maîtriser la température maximale du combustible et les effets induits par ce flux de chaleur, à savoir le gradient au sein des matériaux et les dilatations différentielles entre le combustible et la gaine.

La densité de matière fissile dans le volume réactif quant à elle dépend principalement de la forme des éléments de combustible : la forme détermine la capacité de la matière fissile à être arrangée dans un volume donné en visant un taux de remplissage maximal, mais donne aussi la perméabilité nécessaire au caloporteur pour assurer l'évacuation de la puissance produite par les éléments avec une perte de charge acceptable.

Dans les installations nucléaires, classiquement, trois familles d'éléments combustibles de base peuvent être utilisées : élément de type plaque (de toutes formes), élément de type cylindrique (le plus souvent à section circulaire ou annulaire) s'allongeant suivant son axe, et élément de type sphérique, le plus souvent sous la forme de particules de faible diamètre (de l'ordre du millimètre). Par ailleurs, les particules sphériques peuvent être enrobées dans une matrice inerte pour générer des éléments combustibles composites, qui peuvent également se présenter sous les trois formes précédentes de boulet, de plaque et compacte. Chacun des types d'éléments combustibles combine des solutions différentes aux problèmes posés, et fait l'objet de compromis quant à son domaine de fonctionnement.

Ainsi par exemple, dans les plaques, les gaines se comportent comme des coques à fort élancement (rapport entre la longueur libre de la coque et son épaisseur). Le matériau de gainage adapte, par sa malléabilité, sa géométrie à celle de la partie centrale du combustible, ce qui permet l'accommodation des déformations différentielles (gonflement et dilatation) par rapport au matériau combustible, transversalement et à très faible niveau de contraintes. Cette structure plaque présente cependant une faible capacité à accommoder les déformations dans le sens de l'épaisseur en raison de la très faible raideur des gaines perpendiculairement à leur plan, et cette liberté permet au combustible de se déformer de manière anisotrope préférentiellement dans cette direction. Par ailleurs, cette structure est instable en flambage en cas de mise en compression dans son plan, globalement ou localement (sur un point chaud par exemple), particulièrement dans les cas où l'âme combustible n'est pas, ou faiblement, liée aux gaines.

Au vu de ces lacunes, les éléments plaques ne sont de fait utilisés que pour des combustibles froids, c'est-à-dire dans le domaine de température où le matériau combustible ne relâche pas ses produits gazeux, et à des niveaux modérés de la puissance volumique. Les paramètres d'optimisation portent généralement, pour un niveau de puissance volumique visé, sur l'épaisseur de la plaque et la qualité du contact combustible/gaine, sur la maîtrise de la corrosion de la gaine et la non dégradation de ses propriétés de ductilité en fonctionnement. De fait, les principaux modes de ruine des plaques sont liés soit à un manque de ductilité du gainage en déformation imposée (dégradation par corrosion ou durcissement sous irradiation), soit à un accroissement de la résistance thermique entre le combustible et le caloporteur (zone corrodée résistive sur la gaine, décohésion combustible/gaine avec ouverture d'un jeu par flambage local de la gaine par exemple) qui provoque un échauffement du combustible avec relâchement de gaz de fission et mise en pression interne du gainage, conduisant à la rupture par instabilité en déformation de la gaine.

Les éléments cylindriques comprennent les cartouches des réacteurs graphite/gaz, les crayons des réacteurs à eau pressurisée (REP) ou les aiguilles des réacteurs à neutrons rapides (RNR) par exemple..Ici, un jeu radial existe entre le combustible sous forme de pastilles et la gaine où elles sont enfilées, jeu qui permet l'accommodation des déformations différentielles entre le matériau combustible et la gaine : ce jeu est capable, au minimum, de compenser les dilatations différentielles lors de la première montée en puissance de l'élément et la part du gonflement du combustible non résorbable par lui-même par fluage et redensification sur ses cavités internes. De fait, le matériau combustible doit fonctionner à une température qui lui permet d'activer ses propres mécanismes d'accommodation de ses déformations ; en contrepartie, il relâche une partie de ses gaz de fission. Un deuxième volume d'expansion est ménagé dans la gaine, en extrémité des empilements de pastilles de combustible, afin de limiter la pression interne dans l'élément. Le transfert thermique entre les pastilles combustibles et le caloporteur se fait ainsi radialement à travers une résistance thermique constituée du jeu radial pastille/gaine rempli de gaz et de l'épaisseur de la gaine. La maîtrise de cette résistance thermique tout au long de la vie de l'élément permet de garantir le respect des limites de températures acceptables dans le combustible. Dans cette conception d'éléments, il existe donc un transfert thermique à travers un joint gazeux calibré, et un vase d'expansion ménagé dans la direction transverse à celle du transfert thermique.

Les principaux paramètres d'optimisation de ces éléments cylindriques sont le jeu radial initial entre le combustible et la gaine, la qualité du fluide assurant la liaison thermique entre le combustible et la gaine (joint gazeux ou joint métallique fondu), la densité de remplissage effective du combustible dans la section de la gaine (jeu radial, porosité, présence de lacunes comme un trou central et/ou des évidements lenticulaires en extrémité de pastille), la raideur de la gaine (épaisseur), les lois de comportement (gonflement et fluage) des matériaux de la gaine et du combustible, et leurs propriétés mécaniques (résistance et ductilité).

La présence d'un jeu combustible/gaine apporte cependant une résistance thermique variable en fonctionnement (évolution du jeu et dégradation de la conductibilité par la présence des gaz de fission) qui complique la maîtrise de la température maximale du combustible quant au respect de la non atteinte de la limite en fusion du matériau combustible dans toutes les situations de fonctionnement. D'autre part, le fonctionnement en « enceinte en pression » de ce type d'élément implique l'utilisation de matériaux capables d'assurer la tenue mécanique de l'élément sans risque de rupture brutale (instantanée et/ou différée) en pression ; à cette fin, la section circulaire, qui présente la meilleure résistance à la pression, est le plus souvent adoptée : en situation d'interaction mécanique entre le combustible et la gaine, celle-ci oppose une raideur de frettage importante par sa mise en traction circonférentielle, et la pression circonférentielle exercée par la gaine sur le combustible active ses mécanismes de réarrangement sur lui-même.

Le choix du matériau de gaine apparaît ainsi primordial en ce qu'il doit présenter une résistance à la rupture compatible avec les températures de fonctionnement visées, une ductilité en plasticité et en fluage thermique, et une ténacité suffisante (typiquement > 20 MPa • √m) ; ce choix (limite de résistance en instantané et en fluage) et celui du matériau combustible (température de fusion) déterminent les conditions limites (températures et puissance volumique) de fonctionnement des éléments de combustible. Le principal mode de ruine résiduel associé à ce type d'éléments est en effet l'interaction mécanique combustible/gaine instantanée dépassant la capacité de déformation de la gaine (cas de remontée en puissance à un niveau supérieur du fonctionnement précédent ou dans un régime de fonctionnement où la température du combustible n'active pas ses mécanismes d'auto accommodation de ses déformations).

En ce qui concerne les éléments sphériques, différentes couches d'enrobage sont successivement déposées sur un noyau fissile qui doit être centré ; des espaces vides sont donc créés, sous forme de porosités, au sein du noyau fissile et dans une couche intermédiaire tampon, appelée « buffer », à très forte porosité, qui assure la continuité initiale entre le noyau fissile et les couches de gainage. L'accommodation des déformations différentielles entre le combustible et la gaine, c'est-à-dire la couche de revêtement, se fait par comblement des lacunes : en fonctionnement, la densification progressive du buffer libère un jeu radial permettant d'empêcher une interaction mécanique forte entre le noyau fissile et les couches de gainage. De plus, les volumes libres internes au gainage retiennent les gaz de fission relâchés par le matériau fissile : la forme sphérique de la gaine est alors bien adaptée pour résister à la pression interne qui s'établit. Les paramètres d'optimisation des particules élémentaires sont essentiellement le choix des matériaux (nature, structure, propriétés et lois de comportement sous flux neutronique et en température) et de l'épaisseur des différentes couches.

Ces éléments combustibles ne sont utilisés que dans des réacteurs à flux thermique refroidis au gaz fonctionnant à haute température. Leur principal mode de ruine résiduel correspond à l'interaction forte entre le noyau fissile et les couches de gainage (mise en traction par déformation imposée de la gaine) qui peut provoquer la rupture de la gaine de confinement : de ce point de vue, la forme sphérique du gainage, bien qu'optimale en ce qui concerne l'interaction mécanique, est la plus défavorable car elle ne laisse libre aucune direction de déformation du matériau combustible (au-delà de sa densification maximale) pour relaxer les efforts d'interaction (mise en pression hydrostatique du volume interne de la gaine).

Ce type d'élément combustible sphérique est de fait principalement utilisé en tant que partie d'éléments composites de formes diverses diluant les particules dans une matrice assurant le transfert thermique vers le caloporteur, avec une faible fraction volumique (quelques %) du matériau fissile dans le volume réactif.

Les éléments composites ont été développés principalement pour diminuer le risque de pollution du circuit primaire du caloporteur en cas de rupture d'éléments combustibles, afin de réduire au maximum la quantité de produits de fission susceptibles d'être relâchés suite à un événement initiateur de rupture. En particulier, les éléments en forme de plaques macro structurées peuvent être considérés comme une solution, avec l'arrangement ordonné des particules de combustible et/ou la recherche d'une densité de particules compatible avec la fraction volumique de l'application visée. Dans tous les cas, pour obtenir une bonne conductibilité homogénéisée transverse de la plaque, une matrice de dilution du combustible et des plaques de gainage en matériau métallique sont utilisées pour les applications envisagées.

Il apparaît que les GFR, dont le gaz caloporteur, He par exemple, permet d'atteindre en sortie de réacteur un niveau de température suffisamment élevé compatible avec les applications envisagées de production d'électricité à fort rendement (par exemple en cycle direct) ou de production d'hydrogène, doivent fonctionner avec un flux rapide assurant la possibilité d'atteindre un taux de conversion supérieur à 1 (surgénération) et/ou une capacité à transmuter des déchets (produits de fission et actinides mineurs) : une adaptation des niveaux de sûreté et de fiabilité en fonctionnement à ces exigences par rapport à ceux déjà atteints dans les systèmes des précédentes générations est donc souhaitable.

Le problème à résoudre pour avoir un élément combustible compatible avec le cahier des charges des GFR est à quatre composantes :

1) assurer une fraction volumique importante de combustible dans la matrice,
2) garantir la tenue mécanique de chaque cellule à la pression interne des gaz de fission relâchés par le combustible,
3) éviter les interactions fortes entre le combustible (par son gonflement) et les structures de la cellule,
4) évacuer la puissance produite vers le caloporteur avec une bonne conductivité transverse de la plaque pour maîtriser les températures au coeur de la plaque et les contraintes induites dans les structures.

En particulier, pour atteindre les caractéristiques neutroniques des coeurs GFR, les fractions volumiques de combustible dans l'âme composite de l'élément plaque devraient être supérieures à 50 %, le solde étant constitué d'une matrice inerte. La densité de puissance dans l'âme composite atteignant quelques centaines de MW/m$^3$, le transfert thermique vers le caloporteur induit des écarts de température importants entre la gaine (surfaces d'échange de l'élément plaque avec le caloporteur) et l'âme composite de la plaque ; le fonctionnement à haute température (température de caloporteur supérieure à 850°C) impose par ailleurs d'utiliser pour le gainage et la matrice de l'élément plaque des matériaux ayant des propriétés de conductibilité thermique, de transparence aux neutrons et de résistance mécanique compatibles, en particulier des métaux et alliages réfractaires ou des céramiques.

D'autre part, les forts taux de combustion atteints vont provoquer un gonflement important du combustible (plusieurs %) et un relâchement significatif de produits de fission gazeux, exacerbé qui plus est par la température du combustible. Chaque cellule élémentaire de la plaque de combustible doit, si possible, pouvoir accommoder ces sollicitations sans rupture et sans déformation excessive de la plaque, qui pourrait influer sur la section de passage du caloporteur entre les éléments plaques : le volume d'expansion ménagé dans chaque cellule entre le combustible et la matrice devrait être garanti pour éviter une interaction mécanique forte générant des niveaux de contraintes inacceptables par la structure matrice/gaine et pour maintenir un niveau de la pression interne des gaz de fission compatible avec la tenue mécanique de la gaine dans toutes les situations de fonctionnement de l'élément combustible (normales, en cas d'incidents, voire d'accident).

Ce problème est d'autant plus difficile à résoudre que le niveau des températures de fonctionnement implique pour les structurels de l'élément sous forme de plaque l'usage de matériaux à faible ductilité et ténacité ce qui les rend particulièrement sensibles aux charges de type déformations imposées, comme les gradients de dilatation thermique et de gonflement internes aux matériaux ainsi que les interactions entre combustible et structures (gonflement et dilatation thermique différentiels).

Aucune structure existante ne remplit ces critères de façon optimale.

En particulier, le document US 3 097 152 propose une géométrie de cellules incluant des particules de combustible qui n'est pas apte à couvrir le domaine des températures de fonctionnement et de flux visé dans les GFR : les matériaux de structure de là plaque ne sont pas compatibles avec les températures envisagées notamment aux contacts de la matrice et du combustible, avec une forte densité de combustible dans la matrice et une puissance volumique élevée. Qui plus est, l'absence de volume libre autour des particules de combustible ne permet pas d'accommoder à la fois le stockage à pression acceptable par la structure des gaz de fission relâchés par le combustible et les déformations différentielles combustible/matrice, répercutées ainsi intégralement dans l'épaisseur de la plaque.

La conception des plaques décrites dans le document US 3 070 527 n'est pas adaptée non plus aux conditions de fonctionnement des GFR : la plaque y est constituée d'une âme centrale compartimentée, chacun des compartiments recevant un combustible métallique ou céramique, des gainages plaqués de part et d'autre en assurant l'obturation. La cible visée étant les réacteurs à eau, le combustible est défini pour être plus froid, avec des plaques de structures métalliques (aluminium, acier inoxydable, zirconium, alliages de zirconium) minces et de même nuance, non liées au combustible.

Le document US 3 855 061 décrit quant à lui une conception de plaque basée sur le principe d'un réseau ordonné de particules sphériques de combustible, dont le domaine d'application concerne les réacteurs à eau bouillante (BWR) et à eau pressurisée (PWR ou REP) : sont recherchées la maîtrise de la dispersion et de la fraction volumique de combustible dans le composite et sa capacité à atteindre des taux de combustion plus élevés. Les sphères de combustible sont ainsi rangées dans des plaques métalliques percées de trous cylindriques circulaires (l'épaisseur de chacune des plaques et le diamètre des trous sont égaux au diamètre des sphères), ce qui libère, autour de chaque sphère, un volume d'expansion recevant les gaz de fission et permettant une certaine expansion géométrique du combustible. Deux plaques de gainage métallique viennent de part et d'autre assurer l'étanchéité de l'élément. Les densités de remplissage en matériau combustible de la matrice centrale des plaques peuvent avoisiner 20 à 25 % ; son aptitude à atteindre des fractions volumiques importantes avec des densités de puissance et des températures de fonctionnement élevées n'est pas abordée.

## EXPOSÉ DE L'INVENTION

Le développement d'une nouvelle, quatrième, génération de réacteurs nucléaires doit donc de préférence s'accompagner de la conception de nouveaux éléments combustibles palliant les inconvénients des structures existantes.

L'invention propose ainsi une configuration pour le combustible nucléaire susceptible de fonctionner avec les réacteurs GFR, bien que cette utilisation ne soit pas limitative.

Plus généralement, l'invention se rapporte à un élément combustible comprenant une plaque de gainage munie d'un réseau de parois formant des alvéoles, de préférence sous forme d'un nid d'abeilles, avantageusement unitaire avec la plaque, et au moins une pastille de combustible nucléaire localisée, avec un jeu radial, dans une alvéole. Chaque pastille de combustible de l'élément s'étend le long d'un axe entre deux faces opposées, par exemple sous forme d'un cylindre de révolution ; avantageusement, l'une au moins des faces opposées est bombée, de préférence en son centre, c'est-à-dire qu'elle présente une saillie vers l'extérieur, de sorte qu'un espace axial initial est également laissé entre la pastille et l'alvéole.

Pour son utilisation, l'élément selon l'invention comprend une deuxième plaque de gainage, munie du même réseau de parois que la première ou plane, qui peut être adaptée sur la première plaque de sorte que les alvéoles sont fermées. Avantageusement, une brasure, un collage ou un soudage permettent d'obtenir des alvéoles étanches, qui sont de préférence remplies de gaz neutre, comme l'hélium, et d'une pastille de combustible chacune.

Les plaques et parois des alvéoles de l'élément selon l'invention peuvent être réalisées en métal réfractaire ou en céramique, monolithique ou renforcée par des fibres, comme un carbure de silicium avec fibres de même nature ou de nature différente. Dans le cas de plaques céramiques en particulier, une couche métallique peut être interposée dans les alvéoles, entre la pastille et les parois, pour parfaire le confinement des produits de fission.

Les dimensions des plaques et pastilles sont adaptées et optimisées en fonction du réacteur. De préférence, la phase fissile représentée par les pastilles fait plus de 20 % en volume du milieu réactif (coeur), soit plus de 50 % du volume de l'âme composite de l'élément plaque, et le volume libre entre pastilles et parois internes de l'alvéole représente plus de 40 % du volume des pastilles.

## BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.

La figure 1 illustre un mode de réalisation d'un élément selon l'invention.

Les figures 2A et 2B, respectivement 2C et 2D, schématisent des modes de réalisation d'éléments selon l'invention.

## EXPOSÉ DÉTAILLÉ DE MODES DE RÉALISATION PARTICULIERS

Pour mieux comprendre le caractère innovant de l'élément proposé, une analyse préalable des phénomènes se produisant dans les réacteurs de type GFR pour lesquels l'élément combustible selon cette invention a été conçu en priorité, même si d'autres applications sont possibles, permettra de déduire les contraintes à prendre en compte.

Les réacteurs nucléaires qui fonctionnent avec un flux rapide ont besoin d'éléments combustibles assurant une fraction volumique de matériaux fissiles importante dans le coeur. Le fonctionnement du combustible à haute température impose par ailleurs d'avoir dans les éléments combustibles un volume d'expansion permettant de recueillir les gaz de fission relâchés. Compte tenu de l'espace nécessaire au passage du fluide caloporteur pour limiter les pertes de charge à des valeurs raisonnables et du volume qu'occupent les autres structures du coeur, la part de volume restante pour les structures et volumes d'expansion des éléments combustibles est faible. Pour l'invention, il s'agit donc de réduire au maximum le volume de structure (gaine et matrice) dans l'élément combustible pour obtenir suffisamment de quantité de combustible et également de volume d'expansion entre le combustible et la cellule de confinement qui le contient.

En particulier, pour que les GFR atteignent des conditions neutroniques de fonctionnement satisfaisantes, les fractions volumiques de matériau combustible dans le milieu réactif (coeur) sont de l'ordre d'au moins 20-25 % suivant la densité et l'enrichissement en matière fissile du combustible. Les densités de puissance volumique dans le coeur sont de l'ordre de 100 MW/m$^3$, et la fraction volumique occupée par le gaz caloporteur nécessaire au refroidissement avec une perte de charge acceptable et une température de caloporteur respectant l'objectif T > 850˚C devrait être au moins de l'ordre de 40 %. Les puissances volumiques dans le matériau fissile atteignent en moyenne des valeurs de 400 à 500 MW/m$^3$, soit des valeurs maximales de 600-750 MW/m$^3$ en fonction des profils de flux dans le coeur. Les autres matériaux intervenant dans la composition des structures occupant la fraction volumique de 30 à 35 % restante (hors jeu) doivent avoir une transparence neutronique pour ne pas dégrader le flux (en intensité et en spectre).

Enfin, pour diminuer le risque de pollution du circuit primaire du caloporteur en cas de rupture, la quantité de produits de fission susceptibles d'être relâchés est réduite par une géométrie composite des éléments combustibles.

Ainsi, les principes de conception du nouvel élément combustible sous forme de plaque pour les GFR sont :

- la dispersion du combustible en cellules élémentaires assurant chacune, avec un bon niveau de fiabilité (étanchéité et marge à la rupture), le confinement des produits de fission gazeux relâchés à la température de fonctionnement du combustible, ce qui implique une tenue en pression des cellules et l'accommodation du gonflement et de la dilatation thermiques différentiels entre le combustible et la structure de la cellule, sans déformation excessive de la cellule,
- l'arrangement des cellules élémentaires pour correspondre à la fraction volumique de produit fissile dans le coeur,

- un refroidissement homogène des cellules par le caloporteur pour diminuer la plage de variation de la température de fonctionnement du combustible d'une cellule à l'autre et au cours de l'irradiation,
- l'utilisation de matériaux compatibles avec le niveau des températures de fonctionnement, la transparence et le non ralentissement des neutrons, et les flux thermiques à évacuer,
- une valeur d'élancement (rapport épaisseur ou diamètre à la plus grande dimension de l'élément) compatible avec une bonne tenue mécanique globale de l'élément, garantissant son maintien en position en tant que structure dans l'architecture du coeur (tenue vibratoire et non délocalisation du combustible),
- une forme d'élément accommodant des déformations imposées par les gradients de conditions de fonctionnement (température, flux neutronique) auxquelles il est soumis, avec un niveau de contraintes induites compatible avec sa tenue mécanique.

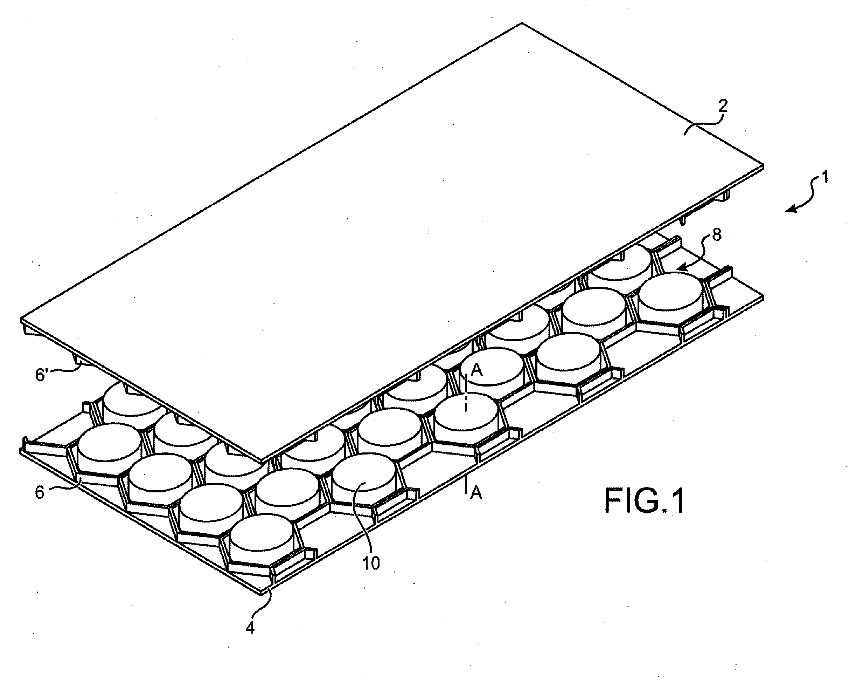

Il a été trouvé qu'une structure adaptée comprenait un élément composite sous forme de plaque avec une macrostructure définissant des alvéoles individuelles pour chaque pastille, illustré sous une forme préférée en figure 1. L'élément plaque composite macro structuré 1 est construit sur la base d'un panneau sandwich avec deux plaques de gainage 2, 4 dont l'âme est un réseau 6 d'alvéoles 8 ordonnées en nid d'abeilles, disposées sensiblement orthogonalement aux faces des plaques 2, 4.

La structure 6 en nid d'abeilles est le réseau qui donne à la fois :

• la plus grande compacité d'alvéoles 8 dans le plan et donc le plus grand volume libre pour mettre le combustible 10 dans le réseau 6,

• une bonne isotropie de comportement mécanique de l'élément 1 dans son plan,

• une bonne raideur de l'élément 1 en flexion, et

• une résistance élevée en flambage en compression dans son plan.

Cependant, il est possible d'adopter, suivant les circonstances, d'autres réseaux d'alvéoles, réguliers (par exemple un damage carré) ou non (par exemple une structure mixte d'octogones et de carrés).

De même, il est préférable que les parois qui forment le réseau 6 soient d'épaisseur identique pour chaque alvéole 8, et qu'elles soient perpendiculaires au plan de la structure 1 ; cependant, des variantes sont envisageables, pour raisons de construction notamment.

Chaque alvéole 8, délimitée par les parois 6 et fermée à ses extrémités par les faces 2, 4 de l'élément plaque 1, constitue une cellule élémentaire bâtie suivant les principes de conception énoncés précédemment pour assurer le transfert thermique entre le combustible 10 qui y sera localisé et les faces des plaques de gainage 2, 4 refroidies par le caloporteur, pour ménager le volume d'expansion des gaz de fission, et pour favoriser une interaction mécanique combustible 10/gaine 2, 4 à faible niveau de contrainte dans les structures de la cellule.

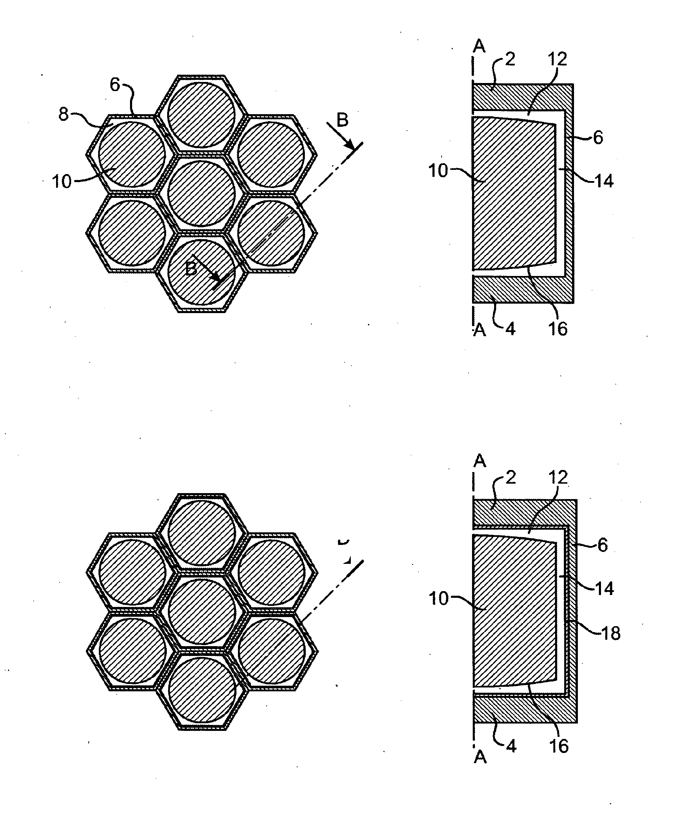

Chaque alvéole 8 de section hexagonale peut recevoir, et avantageusement reçoit, une pastille combustible 10 de forme cylindrique circulaire en ménageant (voir figures 2) :

- un jeu axial 12 entre pastille 10 et gaine 2, 4 calibré (par exemple quelques dizaines de μm) pour réguler la température à coeur du combustible tout au long de la durée d'exploitation de l'élément 1, l'objectif étant d'assurer le transfert de toute la puissance de la pastille 10 à travers ce jeu,
- un jeu radial 14 entre pastille 10 et parois 6 de l'alvéole 8, dimensionné pour créer le volume d'expansion nécessaire dans la cellule et pour empêcher l'interaction mécanique circonférentielle entre la pastille 10 et l'alvéole 8.

Le volume d'expansion est de fait constitué du jeu circonférentiel 14 et de la différence de volume dégagée entre la forme hexagonale interne de l'alvéole 8 et le cylindre circulaire 10 inscrit dans l'hexagone. Le jeu radial 14 est de préférence important (par exemple quelques centaines de μm) pour assurer le découplage thermique entre la pastille 10 et la paroi 6 de l'alvéole 8. Les échanges thermiques radiaux via les parois de l'alvéole sont ainsi évités, ou du moins minimisés, de façon à maintenir le réseau 6 à une température moyenne égale à celle des gaines 2, 4 et éviter ainsi les dilatations différentielles entre les gaines 2, 4 et la structure centrale 6 du composite.

Il est en outre possible de créer une interaction mécanique contrôlée entre la pastille 10 et la gaine 2, 4 en direction axiale, en réglant le jeu initial et en utilisant notamment des pastilles 10 avec un profil d'extrémité de forme bombée qui établit un contact progressif du centre de l'alvéole 8 vers la périphérie (toute autre protubérance serait envisageable, mais la géométrie bombée, outre sa simplicité de fabrication, permet d'obtenir une symétrie et un contact progressif qui répartit l'effort sur une grande surface). La déformation de flexion imposée aux gaines 2, 4 par la pastille est alors accommodée, d'une part, par la pastille 10 elle-même (qui se déforme radialement : voir ci-dessous), et d'autre part en flexion par la gaine dont la raideur est adaptée (épaisseur de la gaine 2, 4 et cotes sur les alvéoles 8) pour minimiser les contraintes induites dans les structures de la cellule 8.

L'accommodation par le combustible 10 lui-même de certaines déformations empêchées axialement du fait du contact mécanique se fait préférentiellement en expansion circonférentielle dans le jeu radial 14. Les déformations de la pastille combustible 10 se font donc dans un système où une direction est contrainte (direction dans l'axe AA de la pastille 10), et les deux autres sont libres (expansion circonférentielle). Dans ce système, la pastille combustible 10 présente une raideur minimale dans sa direction AA d'interaction avec la gaine 2, 4.

Ainsi, tel qu'illustré en figures 2, le réseau 6 en nid d'abeilles présente de façon particulièrement préférée des alvéoles 8 hexagonales avec chacune une pastille combustible 10 de section circulaire. Un volume libre 14 est aménagé entre la pastille 10 et les parois 6, qui garantit l'absence d'interaction radiale entre pastille 10 et alvéole 8 ; les gaines 2, 4 ferment les extrémités de l'alvéole 8, avec un jeu axial 12 assurant le transfert thermique entre la pastille 10 et la gaine 2, 4. Chaque face opposées de la pastille combustible 10 le long de son axe AA présente une convexité 16 pour localiser le contact progressif pastille 10/gaine 2, 4 au centre de l'alvéole 8.

De préférence, l'ensemble de la structure de l'élément 1, c'est-à-dire le réseau 6 et chacune des plaques 2, 4 de gainage, est fabriqué dans le même matériau réfractaire, qui peut être un métal, ou une céramique, la céramique pouvant être monolithique ou comporter des fibres elles-mêmes céramiques.

En particulier lorsque les parois sont en céramique, tel qu'illustré en figure 2C, il est possible d'ajouter une couche métallique 18, ou « liner », plaquée sur les parois de chaque cellule 8. Le feuillard 18 encapsule de préférence complètement la pastille 10 et son volume d'expansion 12, 14, pour augmenter ainsi le confinement des produits générés lors du fonctionnement du réacteur.

En ce qui concerne l'assemblage, tel qu'on le voit en figure 1, l'élément plaque 1 peut être constitué de deux demi éléments assemblés dans le plan à mi-épaisseur, c'est-à-dire à mi-hauteur de parois 6. Les deux demi éléments 2, 6' et 4, 6 peuvent de fait être identiques et comporter chacun sur une face de la plaque de gainage 2, 4 le réseau d'alvéoles 6, 6' hexagonales en « impression ». Sous un autre mode de réalisation, il peut s'agir de l'assemblage d'une plaque 4 comportant en impression sur une face le réseau 6 complet d'alvéoles 8 avec une plaque de gainage lisse venant fermer les cellules 8 sur l'autre plan. Il est également possible de réaliser la grille 6 centrale en structure nid d'abeilles indépendamment, puis de l'assembler avec deux plaques planes 2, 4 fabriquées séparément.

Lorsque les structures de l'élément combustible 1 (gaines 2, 4 et grille 6) autorisent le choix d'un matériau métallique, les trois modes de réalisation précédents sont envisageables : le positionnement du ou des plans de liaison entre structures 2, 4, 6 est déterminé par des considérations de facilité de réalisation. Par contre, dans le cas d'une réalisation d'un élément « tout céramique », il peut être préférable de n'utiliser qu'un plan de liaison entre deux sous structures, et de le situer au plan médian de l'élément 1 (tel qu'illustré en figure 1), c'est-à-dire là où les contraintes en fonctionnement sont les plus faibles ; cette option élargit le choix des procédés de liaison céramique-céramique utilisables (brasage, soudure par diffusion, collage par un précurseur de céramique,...).

Selon un mode de réalisation particulièrement avantageux pour satisfaire aux conditions de fonctionnement de flux rapide, de température de caloporteur élevée et de forte densité de puissance d'un GFR, les pastilles 10 de combustible sont cylindriques circulaires de diamètre 11,18 mm et de hauteurs 4,9 mm comprenant une forme bombée 16 aux extrémités (flèche au centre de 30 $\mu$m au moins) ; ces pastilles sont fabriquées à partir de (U,Pu)C suivant un procédé standard avec un taux de porosité de 15 %.

Il doit être entendu que les valeurs numériques données ne le sont qu'à titre indicatif, et doivent en tout état de cause être comprises avec les marges d'erreurs usuelles.

L'élément combustible 1 est alors conçu avec une gaine 2, 4, 6 en céramique monolithique (SiC par exemple) ou un composite fibré (SiC-SiCf par exemple), d'une épaisseur totale de 7 mm. Il est réalisé par assemblage de deux demi éléments identiques, chacune comportant un fond plat 2, 4 d'épaisseur 1 mm et un réseau 6, 6' de hauteur 2,5 mm définissant une grille en nid d'abeilles au pas d'alvéoles 8 de 14 mm, et d'épaisseur uniforme des parois de 1,3 mm. L'assemblage des deux demi éléments est réalisé par brasure (avec le procédé adapté à la céramique et au domaine de températures), par soudure par diffusion ou par collage.

Les cellules sont remplies de gaz, de l'hélium, à la pression atmosphérique. Le jeu axial 12 entre pastille 10 et gaine 2, 4 est de 100 $\mu$m, le jeu radial 14 (à l'entre plats de l'hexagone) est de 760 $\mu$m : le volume libre initial entre la pastille 10 et la gaine 2, 4, 6 (sans compter le volume des porosités du combustible) représente alors 47 % du volume de la pastille combustible.

Dans le cas de la mise en place d'un feuillard métallique 18, son épaisseur, comprise entre 25 et 100 $\mu$m, est prise dans l'épaisseur des parois 6 des alvéoles 8 et des gaines 2, 4 : par exemple, l'épaisseur des parois est ramenée de 1,3 mm à 1,1 mm pour une épaisseur de feuillard de 100 $\mu$m. Le feuillard peut être constitué d'alliages de métaux semi-réfractaires, par exemple à base de tungstène, molybdène, niobium...

Par ailleurs, des carbures de titane ou de zirconium peuvent remplacer le carbure de silicium ; des carbures ternaires peuvent également être envisagés, ou des nitrures de titane ou de zirconium, notamment pour un combustible nitruré comme par exemple UPuN.

Dans cette configuration, la fraction volumique de combustible dans l'âme centrale composite de la plaque est de 56 %.

Les plaques 2, 4 sont rectangulaires et de dimensions environ 120 × 250 mm. L'arrangement de ces éléments 1 dans le coeur de réacteur assure la fraction volumique de 22,4 % de phase fissile dans le milieu réactif nécessaire pour le fonctionnement du coeur du GFR.

Le comportement de cet élément 1 a été analysé dans les conditions de fonctionnement d'un GFR de 2400 MW avec une densité de puissance volumique homogénéisée dans le coeur de 100 MW/m$^3$, une température en sortie du caloporteur de 850°C et un taux de combustion du combustible d'au moins 10 % atomique. L'analyse du comportement thermomécanique d'une cellule élémentaire a été faite avec le code aux éléments finis CAST3M dans l'ensemble des situations de fonctionnement permettant le dimensionnement : fonctionnement normal et situation d'arrêt (retour à un état froid isotherme sans pression du caloporteur), incidents avec variation de charge rapide (accroissement de puissance de 10 %), et situations accidentelles avec dépressurisation lente ou rapide du gaz caloporteur.

Cette étude a été menée :

1) sur la cellule ayant la valeur de densité maximale de puissance dans le coeur (dans le plan de flux maximum au centre du coeur), soit une valeur de 670 MW/m$^3$ et une température externe des faces de la plaque de 872°C,

2) pour des cellules ayant des conditions de fonctionnement différentes le long d'un profil axial au centre du coeur (conditions variant de l'entrée à la sortie du coeur en passant par le plan de flux maximal).

Les résultats montrent que, pour le fonctionnement normal jusqu'à 10 % atomique, en faisant l'hypothèse d'un taux de relâchement des gaz de fission de 10 % du combustible (U-Pu)C :

i. La pression interne en fin de vie dans la cellule 8 la plus chargée (6,2 MPa) rattrape juste la valeur de la pression externe du caloporteur (7 MPa). L'ensemble 1 des cellules 8 fonctionne donc pendant toute leur vie avec une pression interne inférieure à la pression externe, ce qui favorise un quasi-contact entre plaque et pastille (dont les effets bénéfiques sont discutés ci-dessous).

ii. Le jeu axial 12 au long de la durée de vie est rattrapé avec une interaction entre pastille 10 et gaines 2, 4 qui induit :

○ une régulation de la température du combustible 1 au cours de l'irradiation (si la puissance volumique est supposée constante, la température maximale du combustible varie sur une plage de 50°C et reste inférieure à 1300°C) ; la fermeture progressive du jeu axial 12 compense la perte de conductibilité du gaz au fur et à mesure du relâchement des gaz de fission,

○ une expansion diamétrale du combustible 10 (par anisotropie du gonflement et par fluage), avec un niveau de déformation axial de la cellule 8 qui reste très faible (déformation maximale en milieu de cellule de l'épaisseur de la plaque de 44 $\mu$m),

○ un faible niveau de contrainte induit dans les structures, que ce soit là contrainte de flexion dans les gaines 2, 4 ou la contrainte de traction dans le plan de liaison 6, 6' qui reste inférieure à 10 MPa.

iii. Il n'y a aucun rattrapage du jeu radial 14, le jeu résiduel en fin de vie et la dégradation progressive de sa conductibilité par les gaz de fission permettant d'isoler thermiquement les cloisons 6 des alvéoles 8 de la pastille combustible 10. La température moyenne de ces parois 6 étant la même que celle des gaines 2, 4, il n'y a donc pas de déformations différentielles entre le nid d'abeilles 6 et les deux plaques 2, 4 (par dilatation et gonflement).

La simulation d'un accroissement rapide de la puissance volumique de 10 % alors que la pastille 10 est en interaction avec les gaines 2, 4 montre que la faible raideur en flexion des gaines permet d'accommoder sans contraintes supplémentaires significatives la déformation instantanée imposée à la cellule 8 par la pastille 10.

De même, la perte de la pression externe, dans la situation d'arrêt considérée et dans les accidents de dépressurisation, qui met en surpression interne les cellules 8 des éléments 1, provoque une mise en contrainte acceptable des structures 2, 4, 6 de la cellule : flexion modérée des gaines et mise en traction du plan de liaison avec une valeur maximale de 24 MPa en cas de dépressurisation rapide.

Cette étude révèle qu'une part importante des contraintes dans les structures 2, 4, 6 des cellules 8 en fonctionnement est induite par des charges de déformations imposées, en dilatation thermique et en gonflement, localement dans les épaisseurs, longitudinalement ou entre sous structures. Ces contraintes peuvent être relaxées lors de l'irradiation par fluage (fluage d'irradiation et fluage thermique). Leur niveau dépend aussi directement des propriétés physiques et mécaniques des matériaux mis en oeuvre.

Le module $M = \dfrac{E \times \alpha}{\lambda \times (1 - \nu)}$ où E est le module d'Young, $\alpha$ le coefficient de dilatation thermique, $\lambda$ la conductibilité thermique et $\nu$ le coefficient de Poisson, permet de choisir le matériau qui minimise ces charges par une valeur faible de M. A titre d'exemple, le tableau ci-après donne les valeurs de M à 1000˚C pour une gaine métallique en Nb-1Zr-C et la céramique composite SiC-SiCf.

| Propriétés à 1000˚C | Nb-1Zr-C | SiC-SiCf |
|---|---|---|
| E (GPa) | 84 | 192 |
| $\alpha$ ($10^{-6}$/K) | 7,185 | 4 |
| $\lambda$ (W/m•K) | 61,16 | 10 |
| $\nu$ | 0,4 | 0,18 |
| M | 16,645 | 93,66 |

L'élément combustible selon l'invention, tout en satisfaisant au cahier des charges imposé par les GFR, montre ainsi son aptitude à couvrir un domaine de conditions de fonctionnement et de performances plus large que les éléments existants, pour toute filière :

- possibilité d'accéder à des densités de remplissage en combustible 10 supérieures à 50 % dans le composite 1 (US 3 855 061 ne permettait que 25 %) grâce à la géométrie plaque composite,

- capacité à assurer le confinement des gaz de fission (aussi bien que les éléments des RNR et des sphères HTR actuels) et à accommoder l'interaction pastille 10/gaine 2, 4, 6 sans rupture grâce au blocage, avec une raideur faible, d'une seule direction AA de déformations (mieux que les éléments RNR bloquant 2 directions de déformations du combustible, et que les sphères HTR bloquant les trois),

- capacité à assurer un échange thermique vers le caloporteur en régulant la température maximale au coeur du combustible,

- capacité à fonctionner de manière performante (température, taux de combustion, densité de puissance élevés) avec des matériaux de structures de types céramique (monolithique ou composite fibrée) ou métallique réfractaires en accommodant les charges de déformations imposées avec un niveau de contraintes faible.

Ce type d'élément plaque peut être adapté à des applications dans les autres filières (réacteurs expérimentaux, réacteurs thermiques, réacteurs rapides, réacteurs haute température thermiques, notamment). Les couples de matériaux gaine/combustible habituellement utilisés dans ces applications peuvent en effet être directement transposés à la conception d'éléments plaques macro structurés selon l'invention : la structure du nid d'abeilles fonctionnant dans les mêmes conditions de sollicitations thermique, chimique, mécanique que les gaines usuelles, le même matériau est donc implicitement qualifié.

L'élément combustible plaque composite conçu selon l'invention permet ainsi :

- d'avoir une densité de noyaux lourds compatible avec l'obtention de flux rapides, la structure en nid d'abeilles à maille hexagonale du composite autorisant des fractions volumiques de remplissage en combustible supérieures à 50 %,
- d'utiliser pour remplir les alvéoles des pastilles de combustible tel que $UO_2$, $UO_2$-$PuO_2$, UC, (U,Pu)C, UN, (U,Pu)N,... réalisées avec des procédés standard,
- de limiter la pression interne des gaz de fission relâchés par le combustible dans les alvéoles grâce au volume d'expansion défini par les jeux entre la pastille et la matrice, ce volume d'expansion représentant de l'ordre de 0,5 fois le volume de la pastille combustible, ce qui autorise des combustions nucléaires (« burnups ») performantes,

- de réduire l'inventaire des produits de fission pouvant être relargués dans le caloporteur en cas de perte d'étanchéité de la cellule, chaque alvéole fermée à ses extrémités par les gaines constituant une cellule étanche ;

- d'accommoder les déformations différentielles (dilatation thermique et gonflement) entre le combustible et les structures de l'alvéole avec de très faibles déformations de l'élément plaque ne remettant pas en cause la distribution des débits de refroidissement entre éléments,

- d'optimiser la taille des cellules (pas du réseau hexagonal) avec des alvéoles de taille centimétrique et des épaisseurs de voile et de gaine millimétriques pour :

  ○ assurer le transfert thermique vers le caloporteur préférentiellement par les extrémités des pastilles,
  ○ obtenir une homogénéité des températures moyennes dans les matériaux de structure,
  ○ ajuster la raideur de flexion des gaines qui ferment les alvéoles,
  ○ minimiser les contraintes induites dans les structures des cellules (à ce niveau intervient également le choix des matériaux pour minimiser les charges de type déformation imposée, par dilatation thermique et gonflement, avec, comme critère de choix, la recherche du plus

  petit module $M = \dfrac{E \times \alpha}{\lambda \times (1 - \nu)}$ pour optimiser

  le comportement de la cellule),

- de réguler la température maximale du combustible tout au long de sa vie par la gestion des contacts progressifs pastille/gaine assurant le transfert thermique,

- de pouvoir fonctionner dans tous les types de réacteurs rapides ou thermiques avec des niveaux de densité de puissance dans le combustible pouvant atteindre quelques centaines de MW/m$^3$ avec des matériaux de structures (métalliques) de la plaque adaptés aux températures de fonctionnement, à la nature du caloporteur et du combustible,

- de pouvoir fonctionner dans les réacteurs à haute température rapides ou thermiques avec un élément réalisé complètement en céramique monolithique ou renforcée par des fibres,

- d'ajouter un composant métallique réfractaire, sous la forme d'un feuillard mince ou d'un dépôt pour garantir l'étanchéité dans le cas d'un combustible pour réacteur haute température, prévenant ainsi une qualité insuffisante de confinement de la céramique.

## Revendications

1. Elément combustible nucléaire (1) comprenant une première plaque (4), un réseau (6) d'une pluralité de parois solidarisé à la première plaque (4) pour former des alvéoles séparées (8), et au moins une pastille de combustible nucléaire (10) s'étendant le long d'un axe (AA) entre deux faces opposées, dans lequel la pastille (10) est localisée dans une alvéole (8) avec un jeu radial (14) entre ses parois et la pastille (10), l'axe (AA) de la pastille (10) étant sensiblement parallèle aux parois de l'alvéole (8).

2. Elément selon la revendication 1 dans lequel les parois du réseau (6) ont la même épaisseur, prise dans une direction parallèle à la première plaque (4).

3. Elément selon l'une des revendications 1 à 2 dans lequel le réseau (6) est fabriqué de façon unitaire avec la première plaque (4).

4. Elément selon l'une des revendications 1 à 3 comprenant une deuxième plaque plane (2) solidarisée au réseau (6), parallèle et opposée à la première plaque (4), pour fermer les alvéoles (8).

5. Elément selon l'une des revendications 1 à 3 comprenant une deuxième plaque (2) comprenant un réseau (6') saillant complémentaire du réseau (6) de la première plaque (4) et solidarisée au réseau (6) de la première plaque (4) pour fermer les alvéoles (8).

6. Elément selon l'une des revendications 4 à 5 comprenant une unique pastille (10) de combustible s'étendant le long d'un axe (AA) entre deux faces opposées localisée avec un jeu radial (14) dans chaque alvéole fermée (8).

7. Elément selon la revendication 6 dans lequel chaque alvéole (8) fermée est remplie d'hélium.

8. Elément selon l'une des revendications 4 à 7 dans lequel la phase fissile des pastilles de combustible (10) représente plus de 20 % du volume de l'élément (1).

9. Elément selon l'une des revendications 4 à 8 dans lequel le volume résiduel généré par le jeu (12, 14) dans chaque alvéole (8) représente au moins 40 % du volume de la pastille (10) qui y est localisée.

10. Elément selon l'une des revendications 1 à 9 dans lequel chaque pastille (10) est localisée dans l'alvéole (8) avec en outre un jeu axial (12).

11. Elément selon la revendication 10 dans lequel au moins une des faces opposées de la pastille (10) est bombée vers l'extérieur de la pastille pour minimiser le niveau de contraintes dans la plaque (2, 4) en regard après rattrapage du jeu axial (12).

12. Elément selon l'une des revendications 1 à 11 dans lequel le réseau (6) est une structure en nid d'abeilles d'alvéoles (8) hexagonales.

13. Elément selon l'une des revendications 1 à 12 dans lequel les plaques (2, 4) et le réseau (6) sont composés du même matériau réfractaire, métal ou céramique.

14. Elément selon la revendication 13 dans lequel les plaques (2, 4) et le réseau (6) sont composés d'une céramique, notamment à base de SiC, éventuellement fibrée.

15. Elément selon la revendication 14 comprenant en outre une couche métallique (18) plaquée sur les parois de chaque alvéole (8).

16. Elément selon l'une des revendications 1 à 15 dans lequel chaque pastille (10) a la forme du même cylindre de révolution autour de son axe (AA).

**Claims**

1. Nuclear fuel element (1) comprising a first plate (4), a network (6) with a plurality of walls integral with the first plate (4) in order to form separate cells (8), and at least one nuclear fuel pellet (10) extending along an axis (AA) between two opposite sides, in which the pellet (10) is located in a cell (8) with a radial gap (14) between its walls and the pellet (10), the axis (AA) of the pellet (10) being approximately parallel to the walls of the cell (8).

2. Element according to claim 1, in which the walls of the network (6) have the same thickness, taken in a direction parallel to the first plate (4).

3. Element according to either of claims 1 or 2, in which the network (6) is manufactured in a unitary manner with the first plate (4).

4. Element according to one of claims 1 to 3, comprising a second plane plate (2) integral with the network (6), parallel to and opposite the first plate (4), in order to close the cells (8).

5. Element according to one of claims 1 to 3, comprising a second plate (2), comprising a protruding network (6') complementary to the network (6) of the first plate (4) and integral with the network (6) of the first plate (4), in order to close the cells (8).

6. Element according to one of claims 4 to 5, comprising a single fuel pellet (10) extending along an axis (AA) between two opposite sides located with a radial gap (14) in each closed cell (8).

7. Element according to claim 6, in which each closed cell (8) is filed with helium.

8. Element according to one of claims 4 to 7, in which the fissile phase of the fuel pellets (10) accounts for more than 20% of the volume of the element (1).

9. Element according to one of claims 4 to 8, in which the residual volume generated by the gap (12, 14) in each cell (8) accounts for at least 40% of the volume of the pellet (10) which is located in it.

10. Element according to one of claims 1 to 9, in which each pellet (10) is located in the cell (8) with in addition an axial gap (12).

11. Element according to claim 10, in which at least one of the sides opposite the pellet (10) is curved outwards to minimise comparative stress levels in the facing plate (2, 4) after adjustment of the axial gap (12).

12. Element according to either of claims 1 and 11, in which the network (6) is a honeycomb structure of hexagonal cells (8).

13. Element according to one of claims 1 to 12, in which the plates (2, 4) and the network (6) are made from the same refractory material, metal or ceramic.

14. Element according to claim 13, in which the plates (2, 4) and the network (6) are made from a ceramic, in particular SiC, sometimes fibrous.

15. Element according to claim 14, also comprising a metallic layer (18) plated on to the walls of each cell (8).

16. Element according to one of claims 1 to 15, in which each pellet (10) has the form of a single cylinder revolving about its axis (AA).

**Patentansprüche**

1. Kernbrennstoff-Element (1) mit einer ersten Platte (4), einem Netz-bzw. Gitterwerk (6) aus einer Mehrzahl von mit der ersten Platte (4) fest verbundenen Wandungen bzw. Rändern zur Bildung getrennter Wabenzellen (8), sowie mit wenigstens einer Kernbrennstoff-Tablette bzw. -Pellet, die bzw. das sich längs einer Achse (AA) zwischen zwei entgegengesetzten Oberflächen erstreckt, wobei in dem Element die Tablette bzw. das Pellet (10) in einer Wabenzelle (8) mit einem radialen Spiel (14) zwischen den Zellwandungen und der Tablette bzw. dem Pellet (10) angeordnet und die Achse (AA) der Tablette bzw. des Pellets (10) im wesentlichen parallel zu den Wandungen der Wabenzelle (8) gerichtet ist.

2. Element nach Anspruch 1, bei welchem die Wandungen des Netz-bzw. Gitterwerks (6) die gleiche Dicke in Richtung parallel zu der ersten Platte aufweisen.

3. Element nach einem der Ansprüche 1 bis 2, bei welchem das Netz-bzw. Gitterwerk (6) einstückig mit der ersten Platte (4) ausgebindet ist.

4. Element nach einem der Ansprüche 1 bis 3, welches eine mit dem Netz-bzw. Flechtwerk ( 6 ) fest verbundene zweite flachebene Platte (2), parallel zu der ersten Platte (4) und dieser gegenüberliegend aufweist, zum Verschluß der Zellwaben (8).

5. Element nach einem der Ansprüche 1 bis 3, mit einer zweiten Platte (2), welche ein zum Netz-bzw. Gitterwerk (6) der ersten Platte (4) komplementäres vorspringendes bzw. überstehendes Netz- bzw. Flechtwerk (6') aufweist und mit dem Netz- bzw. Flechtwerk (6) der ersten Platte (4) verbunden ist, zum Verschließen der Wabenzellen (8).

6. Element nach einem der Ansprüche 4 bis 5, welches eine besonders ausgebildete Brennstoff-Tablette bzw.-Pellet (10) aufweist, die bzw. das sich längs einer Achse (AA) zwischen zwei entgegengesetzten Oberflächen erstreckt und mit einem radialen Spiel (14) jeweils in jeder geschlossenen Wabenzelle (8) angeordnet ist.

7. Element nach Anspruch 6 , bei welchem jeweis jede geschlossene Wabenzelle (8) mit Helium gefüllt ist.

8. Element nach einem der Ansprüche 4 bis 7, bei welchem die spaltbare Phase der Brennstoff-Tabletten bzw. -Pellets (10) mehr als 20 % des Volumens der Tablette bzw. des Pellets ausmacht.

9. Element nach einem der Ansprüche 4 bis 8, bei welchem das jeweils durch das Spiel (12, 14) in jeder Wabenzelle (8) eingenommene Rest-Volumen wenigstens 40 % des Volumens der/des darin befindlichen Tablette bzw. Pellets ausmacht.

10. Element nach einem der Ansprüche 1 bis 9, bei welchem jeweils jede Tablette bzw. Pellet (10) in der Wabenzelle (8) außerdem mit einem axialen Spiel angeordnet ist.

11. Element nach Anspruch 10, bei welchem wenigstens eine der Oberflächen der Tablette bzw. des Pellets (10) konvex nach außen gewölbt bzw. bombiert ist, um das Niveau der Beanspruchung in der angrenzenden Platte (2, 4) nach dem Nachstellen des axialen Spiels (12) zu minimierten.

12. Element nach einem der Ansprüche 1 bis 11, bei welchem das Netz- bzw. Gitterwerk eine Bienenwabenstruktur aus sechseckigen Wabenzellen ist.

13. Element nach einem der Ansprüche 1 bis 12, bei welchem die Platten (2, 4) und das Netz- bzw. Gitterwerk (6) aus denselben hitzebeständigen Metall-oder Keramikmaterial bestehen.

14. Element nach Anspruch 13, bei welchem die Platten (2, 4) und das Netz- bzw. Gitterwerk (6) aus einem, gegebenenfalls faserverstärkten, Keramikmaterial auf der Basis von SiC bestehen.

15. Element nach Anspruch 14, welches des weiteren eine jeweils auf die Wandungen jeder Wabenzelle (8) aufplattierte Metallschicht (18) aufweist.

16. Element nach einem der Ansprüche 1 bis 15, bei welchem jede Tablette bzw. jedes Pellet (10) jeweils in Form ein und desselben Rotationszylinders um ihre/seine Achse (AA) ausgebildet ist.

FIG.1

**EP 1 913 600 B1**

## RÉFÉRENCES CITÉES DANS LA DESCRIPTION

**Documents brevets cités dans la description**

- US 3097152 A
- US 3070527 A
- US 3855061 A